# EUROPEAN PATENT SPECIFICATION

(11) **EP 4 224 000 B1**
(45) Date of publication and mention of the grant of the patent: **26.11.2025**
(21) Application number: 23155639.0
(22) Date of filing: 08.02.2023
(51) Int. Cl.: F02C 7/224, F02C 9/40, F02C 3/22, F02C 7/12, F02C 7/16

(54) **MULTIPLE TURBOEXPANDER SYSTEM HAVING SELECTIVE COUPLER**
MEHRFACH-TURBOEXPANDERSYSTEM MIT SELEKTIVEM KOPPLER
SYSTÈME DE TURBODÉTENDEUR MULTIPLE À COUPLEUR SÉLECTIF

(30) Priority: 08.02.2022 US 202217666754
(43) Date of publication of application: 09.08.2023
(73) Proprietor: RTX Corporation, Farmington, CT 06032 (US)
(72) Inventor: MULDOON, Marc J., Marlborough, 06447 (US)
(74) Representative: Dehns

(56) References cited:
- US-A1- 2021 340 908
- US-B2- 10 989 117
- US-B2- 11 041 439

## Description

### TECHNICAL FIELD

The present disclosure relates generally to turbine engines and aircraft engines, and more specifically to turbo expander systems for use when employing hydrogen fuel systems and related systems with turbine and aircraft engines.

### BACKGROUND

Gas turbine engines, such as those utilized in commercial and military aircraft, include a compressor section that compresses air, a combustor section in which the compressed air is mixed with a fuel and ignited, and a turbine section across which the resultant combustion products are expanded. The expansion of the combustion products drives the turbine section to rotate. As the turbine section is connected to the compressor section via a shaft, the rotation of the turbine section drives the compressor section to rotate. In some configurations, a fan is also connected to the shaft and is driven to rotate via rotation of the turbine.

Typically, hydrocarbon-based fuel is employed for combustion onboard an aircraft, in the gas turbine engine. The liquid fuel has conventionally been a hydrocarbon-based fuel. Alternative fuels have been considered, but suffer from various challenges for implementation, particularly on aircraft. Hydrogen-based and/or methane-based fuels are viable effective alternatives which may not generate the same combustion byproducts as conventional hydrocarbon-based fuels. The use of hydrogen and/or methane, as a gas turbine fuel source, may require very high efficiency propulsion, in order to keep the volume of the fuel low enough to feasibly carry on an aircraft. That is, because of the added weight associated with such liquid/compressed/supercritical fuels, such as related to vessels/containers and the amount (volume) of fuel required, improved efficiencies associated with operation of the gas turbine engine may be necessary.

US 10989117 B2 relates to a gas turbine engine using non-traditional cooled liquid fuel with pre-compression inlet air cooling and a turbo-generator. US 11041439 B2 relates to a gas turbine engine using non-traditional cooled liquid fuel to fuel the engine, cool electronics, and drive a turbo-generator. US 2021/340908 A1 relates to employing cryogenic fuel systems and related systems with gas turbine engines.

### BRIEF SUMMARY

According to a first aspect of the invention, an aircraft propulsion system is as claimed in claim 1.

In addition to one or more of the features described above, embodiments of the aircraft propulsion systems may include that the turbo expander assembly consists of a single turbo expander operably coupled to the at least two load sources and the selective coupler comprises a clutch assembly configured to selectively connect the turbo expander to a first load source and a second load source of the at least two load sources.

In addition to one or more of the features described above, embodiments of the aircraft propulsion systems may include that the first load source is continuously driven by the turbo expander and the second load source is decouplable from the turbo expander by a clutch.

In addition to one or more of the features described above, embodiments of the aircraft propulsion systems may include that the turbo expander assembly comprises a first turbo expander operably coupled to a first load source and a second turbo expander and operably coupled to a second load source.

In addition to one or more of the features described above, embodiments of the aircraft propulsion systems may include that the second turbo expander is configured to receive a flow of fuel that is expanded within the second turbo expander and drives operation of the second load source.

In addition to one or more of the features described above, embodiments of the aircraft propulsion systems may include that the first load source and the second load source are electric generators having a combined power output of at least 300 kW of power.

In addition to one or more of the features described above, embodiments of the aircraft propulsion systems may include that each of the first load source and the second load source are electric generators each configured to generate at least 300 kW of power.

In addition to one or more of the features described above, embodiments of the aircraft propulsion systems may include a valve assembly arranged upstream of each of the first turbo expander and the second turbo expander, wherein the valve assembly is configured to selectively direct fuel to each of the first turbo expander and the second turbo expander.

In addition to one or more of the features described above, embodiments of the aircraft propulsion systems may include a valve assembly arranged upstream of each of the first turbo expander and the second turbo expander, wherein the valve assembly is configured to always supply fuel to the first turbo expander and to selectively direct fuel to the second turbo expander.

In addition to one or more of the features described above, embodiments of the aircraft propulsion systems may include a first gear box arranged between the first turbo expander and the first load source and a second gear box arranged between the second turbo expander and the second load source.

In addition to one or more of the features described above, embodiments of the aircraft propulsion systems may include that the at least two load sources are selected from electric generators, pumps, and actuators.

In addition to one or more of the features described above, embodiments of the aircraft propulsion systems may include that the turbo expander assembly comprises a plurality of turbo expanders and the at least two load sources comprises a number of load sources equal to the number of turbo expanders, wherein each turbo expander is selectively coupled to a respective load source.

In addition to one or more of the features described above, embodiments of the aircraft propulsion systems may include that the selective coupler is a valve assembly.

In addition to one or more of the features described above, embodiments of the aircraft propulsion systems may include that the selective coupler is a clutch assembly.

In addition to one or more of the features described above, embodiments of the aircraft propulsion systems may include that the fuel is hydrogen.

In addition to one or more of the features described above, embodiments of the aircraft propulsion systems may include a controller operably connected to the selective coupler and configuration to control operation thereof.

In addition to one or more of the features described above, embodiments of the aircraft propulsion systems may include that the turbo expander assembly comprises a first turbo expander operably coupled to a first load source through a first gear box and a second turbo expander operably coupled to a second load source through a second gear box, and the selective coupler comprises a clutch arranged between the second turbo expander and the second load source.

In addition to one or more of the features described above, embodiments of the aircraft propulsion systems may include a third turbo expander operably coupled to a third load source through a third gear box and the selective coupler comprises a second clutch arranged between the third turbo expander and the third gear box.

In addition to one or more of the features described above, embodiments of the aircraft propulsion systems may include that a first turbo expander of the turbo expander assembly is selectively coupled to a first load source by a clutch of the selective coupler and a second turbo expander of the turbo expander assembly is selectively coupled to a source of fuel through a valve assembly of the selective coupler.

In addition to one or more of the features described above, embodiments of the aircraft propulsion systems may include that a first load source of the at least two load sources is an electric generator configured to generate a first power output and a second load source of the at least two load sources is an electric generator configured to generate a second power output that is different from the first power output.

According to another aspect of the invention, methods of operating an aircraft propulsion system include coupling a turbo expander assembly to at least two load sources through a selective coupler, supplying, from at least one fuel tank, fuel through a fuel flow path comprising passing the fuel through an aircraft-system heat exchanger, a high pressure pump, a fuel-air heat exchanger, and selectively through a turbo expander assembly comprising at least one turbo expander, prior to injecting the fuel into a burner for combustion thereof, wherein the at least one turbo expander is rotationally driven by the fuel passing therethrough, detecting a throughflow of fuel through the turbo expander assembly, and controlling operation of the selective coupler to at least one of drive operation of the at least one turbo expander and selectively control operation of one or more of the operably connected load sources based on the detected throughflow.

In addition to one or more of the features described above, embodiments of the methods may include that the turbo expander assembly consists of a single turbo expander operably coupled to the at least two load sources and the methods further include controlling the selective coupler to operate a clutch assembly to selectively connect the turbo expander assembly to a first load source and a second load source of the at least two load sources based on the detected throughflow.

In addition to one or more of the features described above, embodiments of the methods may include that the turbo expander assembly comprises a first turbo expander operably coupled to a first load source of the at least two load sources and a second turbo expander and operably coupled to a second load source of the at least two load sources, and the methods further include controlling the selective coupler to operate a clutch assembly to selectively couple one or both of the first turbo expander and the second turbo expander to the respective first load source and second load source based on the detected throughflow.

The foregoing features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic cross-sectional illustration of a gas turbine engine architecture that may employ various embodiments disclosed herein;
FIG. 2 is a schematic illustration of a turbine engine system that employs a non-hydrocarbon fuel source;
FIG. 3 is a schematic diagram of an aircraft propulsion system;
FIG. 4 is a schematic diagram of a turbo expander generator system;
FIG. 5 is a schematic diagram of a turbo expander generator system in accordance with an embodiment of the present invention;
FIG. 6 is a schematic diagram of a turbo expander generator system in accordance with an embodiment of the present invention;
FIG. 7 is a schematic diagram of a turbo expander generator system in accordance with an embodiment of the present invention; and
FIG. 8 is a schematic diagram of a turbo expander generator system in accordance with an embodiment of the present invention.

### DETAILED DESCRIPTION

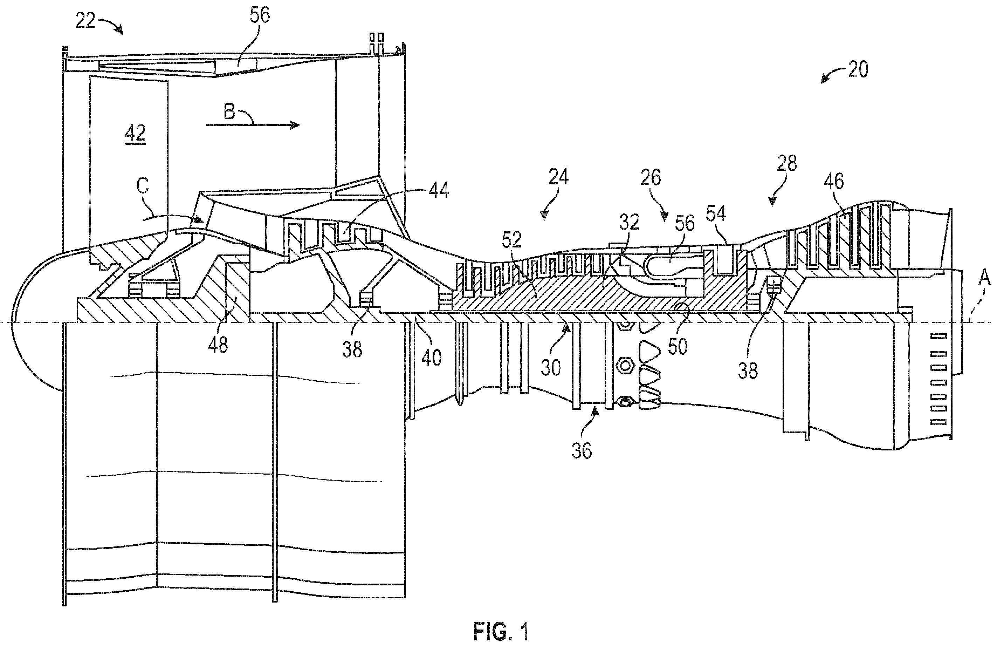

FIG. 1 schematically illustrates a gas turbine engine 20. As illustratively shown, the gas turbine engine 20 is configured as a two-spool turbofan that has a fan section 22, a compressor section 24, a combustor section 26, and a turbine section 28. The illustrative gas turbine engine 20 is merely for example and discussion purposes, and those of skill in the art will appreciate that alternative configurations of gas turbine engines may employ embodiments of the present disclosure. The fan section 22 includes a fan 42 that is configured to drive air along a bypass flow path B in a bypass duct defined in a fan case 15. The fan 42 is also configured to drive air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines.

In this two-spool configuration, the gas turbine engine 20 includes a low speed spool 30 and a high speed spool 32 mounted for rotation about an engine central longitudinal axis A relative to an engine static structure 36 via one or more bearing systems 38. It should be understood that various bearing systems 38 at various locations may be provided, and the location of bearing systems 38 may be varied as appropriate to a particular application and/or engine configuration.

The low speed spool 30 includes an inner shaft 40 that interconnects the fan 42 of the fan section 22, a first (or low) pressure compressor 44, and a first (or low) pressure turbine 46. The inner shaft 40 is connected to the fan 42 through a speed change mechanism, which, in this illustrative gas turbine engine 20, is as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the combustor section 26 between the high pressure compressor 52 and the high pressure turbine 54. A mid-turbine frame 57 of the engine static structure 36 is arranged between the high pressure turbine 54 and the low pressure turbine 46. The mid-turbine frame 57 may be configured to support one or more of the bearing systems 38 in the turbine section 28. The inner shaft 40 and the outer shaft 50 are concentric and rotate via the bearing systems 38 about the engine central longitudinal axis A which is collinear with their longitudinal axes.

The core airflow through core airflow path C is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 (e.g., vanes) which are arranged in the core airflow path C. The turbines 46, 54 rotationally drive the respective low speed spool 30 and high speed spool 32 in response to the expansion of the core airflow. It will be appreciated that each of the positions of the fan section 22, the compressor section 24, the combustor section 26, the turbine section 28, and geared architecture 48 or other fan drive gear system may be varied. For example, in some embodiments, the geared architecture 48 may be located aft of the combustor section 26 or even aft of the turbine section 28, and the fan section 22 may be positioned forward or aft of the location of the geared architecture 48.

The gas turbine engine 20 in one example is a high-bypass geared aircraft engine. In some such examples, the engine 20 has a bypass ratio that is greater than about six (6:1), with an example embodiment being greater than about ten (10:1). In some embodiments, the geared architecture 48 is an epicyclic gear train, such as a planetary gear system or other gear system, with a gear reduction ratio of greater than about 2.3 and the low pressure turbine 46 has a pressure ratio that is greater than about five (5:1). In one non-limiting embodiment, the bypass ratio of the gas turbine engine 20 is greater than about ten (10:1), a diameter of the fan 42 is significantly larger than that of the low pressure compressor 44, and the low pressure turbine 46 has a pressure ratio that is greater than about five (5:1). The low pressure turbine 46 pressure ratio is pressure measured prior to inlet of low pressure turbine 46 as related to the pressure at the outlet of the low pressure turbine 46 prior to an exhaust nozzle. **In** some embodiments, the geared architecture 48 may be an epicycle gear train, such as a planetary gear system or other gear system, with a gear reduction ratio of greater than about 2.3:1. It should be understood, however, that the above parameters are only for example and explanatory of one non-limiting embodiment of a geared architecture engine and that the present disclosure is applicable to other gas turbine engines including turbojets or direct drive turbofans, turboshafts, or turboprops.

A significant amount of thrust is provided by the bypass flow B due to the high bypass ratio. The fan section 22 of the gas turbine engine 20 is designed for a particular flight condition **--** typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °C) / (15.02 °C)]^0.5 ([(Tram °R) / (518.7 °R)]^0.5). The "Low corrected fan tip speed" as disclosed herein according to one non-limiting embodiment is less than about 1150 ft / second (350.5 meters/second).

Gas turbine engines generate substantial amounts of heat that is exhausted from the turbine section 28 into a surrounding atmosphere. This expelled exhaust heat represents wasted energy and can be a large source of inefficiency in gas turbine engines. Further, transitioning away from hydrocarbon-based engines may be significant advantages, as described herein.

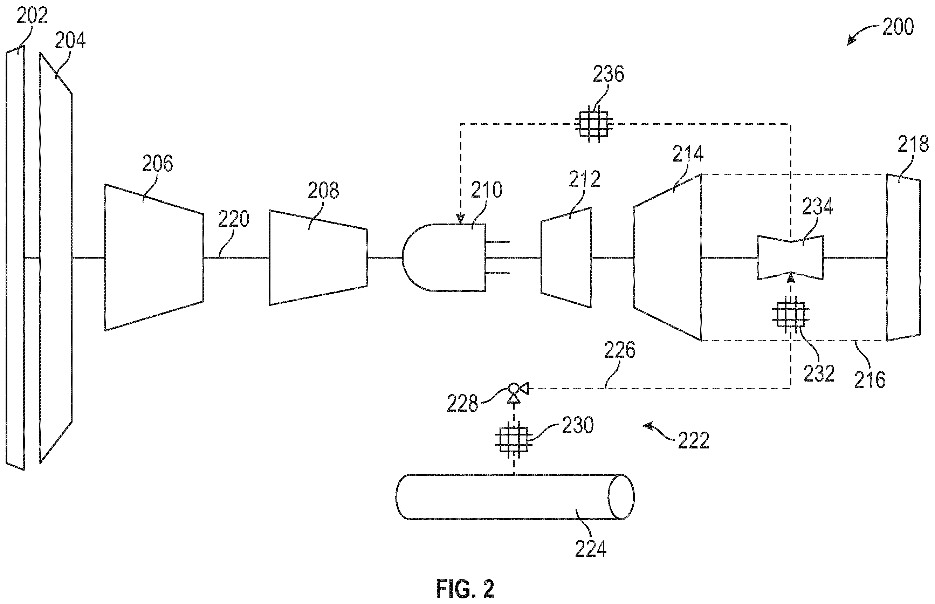

Turning now to FIG. 2, a schematic diagram of a turbine engine system 200 is shown. The turbine engine system 200 may be similar to that shown and described above but is configured to employ a non-hydrocarbon fuel source, such as hydrogen. The turbine engine system 200 includes an inlet 202, a fan 204, a low pressure compressor 206, a high pressure compressor 208, a combustor 210, a high pressure turbine 212, a low pressure turbine 214, a core nozzle 216, and an outlet 218. A core flow path is defined through, at least, the compressor 206,208, the turbine 212, 214, and the combustor sections 210. The compressor 206, 208, the turbine 212, 214, and the fan 204 are arranged along a shaft 220.

As shown, the turbine engine system 200 includes a hydrogen fuel system 222. The hydrogen fuel system 222 is configured to supply a hydrogen fuel from a hydrogen fuel tank 224 to the combustor 210 for combustion thereof. In this illustrative embodiment, the hydrogen fuel may be supplied from the hydrogen fuel tank 224 to the combustor 210 through a fuel supply line 226. The fuel supply line 226 may be controlled by a flow controller 228 (e.g., pump(s), valve(s), or the like). The flow controller 228 may be configured to control a flow through the fuel supply line 226 based on various criteria as will be appreciated by those of skill in the art. For example, various control criteria can include, without limitation, target flow rates, target turbine output, cooling demands at one or more heat exchangers, target flight envelopes, etc.

As shown, between the cryogenic fuel tank 224 and the flow controller 228 may be one or more heat exchangers 230, which can be configured to provide cooling to various systems onboard an aircraft by using the hydrogen as a cold-sink. Such hydrogen heat exchangers 230 may be configured to warm the hydrogen and aid in a transition from a liquid state to a supercritical fluid or gaseous state for combustion within the combustor 210. The heat exchangers 230 may receive the hydrogen fuel directly from the hydrogen fuel tank 224 as a first working fluid and a component-working fluid for a different onboard system. For example, the heat exchanger 230 may be configured to provide cooling to power electronics of the turbine engine system 200 (or other aircraft power electronics). In other embodiments, the arrangement of the heat exchanger 230 and the flow controller 228 (or a flow controller element, such as a pump) may be reversed. In some such embodiments, a pump, or other means to increase a pressure of the hydrogen sourced from the hydrogen fuel tank 224 may be arranged upstream of the heat exchanger 230. This pumping or pressure increase may be provided to pump the hydrogen to high pressure as a liquid (low power). It will be appreciated that other configurations and arrangements are possible without departing from the scope of the present disclosure.

An optional secondary fluid circuit may be provided for cooling one or more aircraft loads. In this secondary fluid circuit, a secondary fluid may be configured to deliver heat from the one or more aircraft loads to one or more liquid hydrogen heat exchanger. As such, heating of the hydrogen and cooling of the secondary fluid may be achieved. The above described configurations and variations thereof may serve to begin raising a temperature of the hydrogen fuel to a desired temperature for efficient combustion in the combustor 210.

The hydrogen may then pass through an optional supplemental heating heat exchanger 236. The supplemental heating heat exchanger 236 may be configured to receive hydrogen as a first working fluid and as the second working fluid may receive one or more aircraft system fluids, such as, without limitation, engine oil, environmental control system fluids, pneumatic off-takes, or cooled cooling air fluids. As such, the hydrogen will be heated, and the other fluid may be cooled. The hydrogen will then be injected into the combustor 210 through one or more hydrogen injectors, as will be appreciated by those of skill in the art.

When the hydrogen is directed along the flow supply line 226, the hydrogen can pass through a core flow path heat exchanger 232 (e.g., an exhaust waste heat recovery heat exchanger) or other type of heat exchanger. In this embodiment, the core flow path heat exchanger 232 is arranged in the core flow path downstream of the combustor 210, and in some embodiments, downstream of the low pressure turbine 214. The core flow path heat exchanger 232 is arranged downstream of the low pressure turbine 214 and at or proximate the core nozzle 216 upstream of the outlet 218. As the hydrogen passes through the core flow path heat exchanger 232, the hydrogen will pick up heat from the exhaust of the turbine engine system 200. As such, the temperature of the hydrogen will be increased.

The heated hydrogen may then be passed into an expansion turbine 234. As the hydrogen passes through the expansion turbine 234 the hydrogen will be expanded. The process of passing the hydrogen through the expansion turbine 234 cools the hydrogen and extracts useful power through the expansion process. Because the hydrogen is heated from a cryogenic or liquid state in the hydrogen fuel tank 224 through the various mechanisms along the flow supply line 226, engine thermals may be improved.

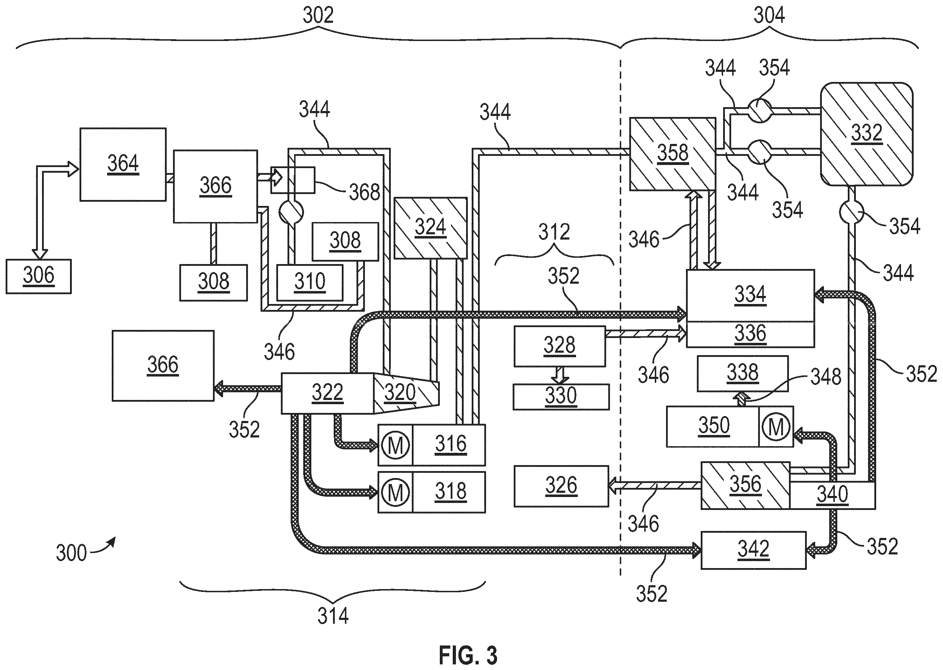

Turning now to FIG. 3, a schematic diagram of an aircraft propulsion system 300 is shown. The aircraft propulsion system 300 includes an engine system 302 and an aircraft system 304. The engine system 302 includes components, devices, and systems that are part of an aircraft engine, which may be wing-mounted or fuselage-mounted and the aircraft system 304 are components, devices, and systems that are located separately from the engine, and thus may be arranged within various locations on a wing, within a fuselage, or otherwise located onboard an aircraft.

The engine system 302 may include the components shown and described above, including, without limitation, a fan section, a compressor section, a combustor section, a turbine section, and an exhaust section. In this schematic illustration, without limitation, the engine system 302 include an engine oil system 306, an air cooling system 308, a burner 310 (e.g., part of a combustion section), an anti-ice system 312, and a generator system 314. Those of skill in the art will appreciate that other systems, components, and devices may be incorporated into the engine system 302, and the illustrative system is merely for explanatory and illustrative purposes. In this illustrative system, a hydrogen high pressure pump 316 and an oil pump 318 are arranged as part of the generator system 314. The generator system 314 further includes a turbo expander 320, an engine-side generator 322, and a hydrogen-air heat exchanger 324. An air turbine starter 326 is provided within the engine system 302. The anti-ice system 312 of the engine system 302 includes an engine bleed system 328 that is configured to supply warm air to a cowl anti-ice system 330 to prevent ice buildup on an engine cowl.

The aircraft system 304 include various features installed and present that are separate from but may be operably or otherwise connected to one or more of the engine system 302. In this illustrative, non-limiting configuration, the aircraft system 304 include one or more hydrogen tanks 332 configured to store liquid hydrogen onboard the aircraft, such as in tanks that are wing-mounted or arranged within the aircraft fuselage. The aircraft system 304 include a cabin air cooling system 334, a wing anti-ice system 336, flight controls 338, one or more aircraft-side generators 340, and aircraft power systems 342.

The schematic diagram in FIG. 3 of the aircraft propulsion system 300 illustrates flow paths for different working fluids. For example, a hydrogen flow path 344 represents a flow path of liquid (or gaseous) hydrogen from the hydrogen tanks 332 to the burner 310. One or more air flow paths 346 represent airflow used for cooling and heat exchange with the hydrogen, and thus one or more heat exchangers or exchange systems may be provided for transferring heat from the air to the hydrogen, to cool the air and warm the hydrogen. A hydraulic fluid flow path 348 is illustrated fluidly connecting a hydraulic pump 350 to the flight controls 338. An electrical path 352 illustrates power generated by the generators 322, 340 and distribution of such power (e.g., from generators 322, 340 to aircraft power systems 342 and other electrical systems onboard an aircraft). As shown, one or more of the paths 344, 346, 348, 352 may cross between the engine system 302 and the aircraft system 304.

Referring to the hydrogen flow path 344, liquid hydrogen may be sourced or supplied from the hydrogen tanks 332. One or more pumps 354 may be arranged to boost a pressure of the hydrogen as it is supplied from the hydrogen tanks 332. In some configurations, the pumps 354 may be low pressure pumps, providing an increase in pressure of about 20 psid to 50 psid, for example. The hydrogen may be supplied to one or more combustion systems. For example, a portion of the hydrogen may be supplied to an auxiliary power source 356, such as an auxiliary power unit having a hydrogen burner or a hydrogen-based fuel cell. The auxiliary power source 356 may be part of the aircraft systems 304 and may be configured to direct air to the air turbine starter 326 along a section of an air flow path 346. Further, the auxiliary power source 356 may be configured to generate power at the generator 340 to supply power to the aircraft power system 342, the hydraulic pump 350, and/or the cabin air cooling system 334 and other ECS systems or other onboard electrically powered systems of the aircraft.

For propulsion onboard the aircraft, a portion of the hydrogen is supplied from the hydrogen tanks 332 along the hydrogen flow path 344 to an aircraft-system heat exchanger 358 which may include a hydrogen-air heat exchanger to cool air. The aircraft-system heat exchanger 358 may be part of the aircraft system 304. One or more low pressure pumps 354 may be arranged to boost a pressure of the hydrogen and thus heat the hydrogen before entering the aircraft-system heat exchanger 358. In some embodiments, the aircraft-system heat exchanger 358 may be part of an environmental control system (ECS) of the aircraft. The cooled air may be supplied, for example, to the cabin air cooling system 334. As this air is cooled, the hydrogen will be warmed within the aircraft-system heat exchanger 358. The warmed hydrogen may then be passed from the aircraft system 304 to the engine system 302. As shown, the hydrogen may flow through a portion of the hydrogen flow path 344 to the hydrogen high pressure pump 316. The hydrogen high pressure pump 316 is configured to increase the pressure of the warmed hydrogen to maintain a pressure above a combustor pressure and/or above a critical pressure in order to avoid a phase change to gas in the plumbing, piping, flow path, or heat exchangers, for example.

The boosted pressure hydrogen may then be conveyed to a second heat exchanger. In this configuration, the second heat exchanger is the hydrogen-air heat exchanger 324 of the generator system 314. The second heat exchanger 324 of this embodiment may be a hydrogen-air heat exchanger arranged proximate an exit or nozzle of the engine system 302 (e.g., exhaust air heat exchanger). In the second heat exchanger 324, the temperature of the hydrogen is further raised. Next, the hydrogen may be passed through the turbo expander 320 of the generator system 314. As the hydrogen is expanded through the turbo expander 320, a turbine may be driven to generate power at the engine-side generator 322. In one non-limiting example, the aircraft-side generator 340 may be configured to generate about 120 kW whereas the engine-side generator 322 may be configured to generate about 300 kW at cruise and about 1 MW at takeoff. That is, in accordance with some embodiments of the present disclosure, the engine-side generator 322 may be configured to generate more power than the aircraft-side generator 340. The expanded hydrogen may then be directed into (e.g., injected) the burner 310, with such supply of hydrogen to the burner 310 controlled by a valve 360. In some embodiments, and as shown, an electric compressor actuator 362 may be included within the engine system 302. The electric compressor actuator 362 may be configured to boost a pressure of the hydrogen prior to injection into the burner 310.

The engine system 302 may further include one or more heat exchanges 364, 366 configured to provide heat exchange onboard the engine. These additional heat exchanges may not be part of the hydrogen flow path 344. For example, an air-oil heat exchanger 364 and an air-air heat exchanger 366 may be arranged for appropriate cooling (or heating) as will be appreciated by those of skill in the art. In some non-limiting embodiments, a post-expander hydrogen-air heat exchanger 368 may be arranged between the turbo expander 320 and the burner 310 and may be used for cooled cooling air, for example.

Using the architecture illustrated in FIG. 3, , the hydrogen may be used as a heat sink to provide increased cooling capacity as compared to other cooling schemes. For example, using liquid or supercritical hydrogen can, in some configurations, provide up to ten times the cooling capacity of prior systems. The hydrogen may be used at various locations along the hydrogen flow path 344 to provide cooling to one or more systems, as noted above. For example, the hydrogen can provide cooling to onboard electronics, generators, air for cooling purposes, etc. The pumps 316, 354 act to increase the temperature of the hydrogen. Use of low pressure pumps (e.g., pumps 354) can allow cooling of cooler heat sources (e.g., onboard electronics) whereas a high pressure pump (e.g., pump 316) can be used to boost the pressure of the hydrogen prior to passing through the hydrogen-air heat exchanger 324 and into the turbo expander 320. Further, because the hydrogen is low temperature at the aircraft-system heat exchanger 358, the hydrogen may act as an efficient heat sink for air. As such, the cabin air conditioning system 334 and other aspects of onboard ECS can be reduced in size, weight, and complexity.

In operation, the hydrogen high pressure pump 316, the hydrogen-air heat exchanger 324, and the turbo expander 320 may be configured to employ the full heat capacity of the hydrogen. For example, the hydrogen may be heated to, but not exceed, an auto-ignition temperature. To achieve this, the hydrogen high pressure pump 316 and the hydrogen-air heat exchanger 324 of the generator system 314 may be sized and configured to increase the temperature of the hydrogen such that it is near the auto-ignition temperature as it passes through the turbo expander 320. The increased pressure and temperature of the hydrogen results in an overheated and/or over pressurized hydrogen that is passed into the turbo expander 320. As such, the engine-side generator 322 may extract the most work from the hydrogen and generate electrical power within the engine system 302.

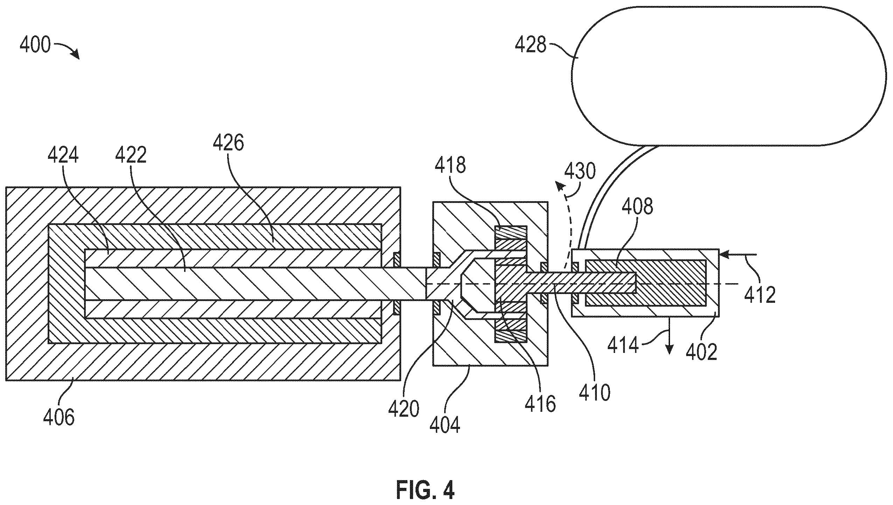

Turning now to FIG. 4, a schematic diagram of a turbo generator system 400 for use with systems of the present disclosure is shown. The turbo generator system 400 may be configured to generate power through the expansion of a cryogenic fluid through a turbo expander. As shown in FIG. 4, the turbo generator system 400 includes a turbo expander 402, a gear box 404, and a generator 406. The turbo expander 402 is configured to receive heated and compressed fluid (e.g., liquid (or gaseous) hydrogen from the hydrogen tanks) which is passed through the turbo expander 402 to drive rotation of one or more turbine rotors 408 of the turbo expander 402. The turbine rotors 408 are operably coupled to an output rotor shaft 410 that provides an output of the turbo expander 402. A fluid input 412 is arranged to supply the fuel to an input or inlet of the turbo expander 402 and a fluid output 414 is configured to direct the expanded (e.g., cooler/lower pressure fluid) to downstream components, such as heat exchangers and/or a burner for consumption of the fuel (such as shown and described above).

The output rotor shaft 410 is operably coupled to the gear box 404 at an input side 416 of the gear box 404. A gear system 418 of the gear box 404 can be configured to change a rotational speed of an output from an output side 420 of the gear box 404. An input rotor shaft 422 is operably coupled to the gear box 404 at the output side 420 of the gear box 404. In some embodiments, and without limitation, the gear box 404 may be configured with a 4:1 gearing ratio. It will be appreciated that other gearing ratios may be employed without departing from the scope of the present disclosure. The input rotor shaft 422 is operably coupled to a rotor system 424 of the generator 406. The rotor system 424 may include magnets, permanent magnets, or the like, which are rotationally driven relative to a stator system 426 of the generator 406. The generator 406 may thus generate electrical power for use onboard an aircraft, for example as described above. In some embodiments, the generator 406 may be configured to generate 300 kW, 500 kW, 1 MW, etc. of electrical power or greater.

As shown in FIG. 4, the turbo generator system 400 may include a secondary tank 428. The secondary tank 428 may contain a secondary fluid that can be used for seal buffering and/or starting of the turbo expander 402. For example, the secondary tank 428 may be configured to contain gaseous hydrogen (GH₂) held at relatively high pressure (e.g., about 2,000 psi). As the fluid from the secondary tank 428 may be the same as the primary fuel (e.g., supplied at fluid input 412), mixing of these two fluids is permitted and such GH₂ from the secondary tank 428 may be integrated into the flow of the primary flow path and expanded and then consumed in a burner or other consumption device (e.g., fuel cell). As such, leaked fluid 430 from the secondary tank 428 is permissible without negatively impacting the operation of the turbo generator system 400 or of other parts of an aircraft propulsion system in which the turbo generator systems 400 is used. In other embodiments, a portion of the fuel (LH₂) from the main tanks may be extracted and directed for purposes of startup and/or seal buffering, and thus the secondary tank 428 may be omitted.

The use of cryogenic liquid hydrogen, or other cold fuels, for aviation fuel requires heat addition from the engine, such as from the exhaust. Having an exhaust heat exchanger opens the possibility of recovering waste exhaust heat if the heated fluid is run through turbo-expanders connected to load sources such as generators, pumps, or the like. Because the fuel flow rate from idle to maximum at takeoff varies by over ten time, it is difficult to design an expander that can operate efficiently over the full range of engine operation. As such, it may be advantageous to employ multiple turboexpanders that are used on demand and selected using coupling/decoupling assemblies (e.g., valves or clutches) to selectively activate and operate one or more of a multitude of turbo expanders. As described herein selective couplers are described for operation of one or more turbo expanders in a single system.

The inclusion of two turbo expanders within the system can achieve a wide range of turbo expander operability with respect to fuel flow that varies considerably between idle and max power. In accordance with an example operation, electrical power from the load source generators may be used in both idle and max power conditions but due to the range of fuel flow, only one expander and load source generator combination would run at idle and two would run during higher-power conditions. This approach prevents any one turbo expander from having to run significantly off-design with very insufficient flow because a smaller number will be used at lower power/fuel flow conditions via the connecting valve. Because the fuel flow can vary by approximate a factor of ten or more between maximum and minimum power, it will be appreciated that additional turbo expanders (e.g., beyond the two illustrated) to accommodate such variability in the fuel flow of the system. For example, and without limitation, in one non-limiting embodiment, a single turbo expander may be used at idle, and four or more turbo expanders may be used at maximum power. In such a scenario, multiple turbo expanders could be connected to a single load source via a gear system. In addition to accommodating higher fuel flow, such multi-turbo expander configuration provides redundancy within the system, such as a failure or issue related to one of the turbo expanders. In such a case, if one turbo expander fails or cannot provide the necessary output, an alternative turbo expander of the set can be used to ensure continued operation without substantial negative impacts.

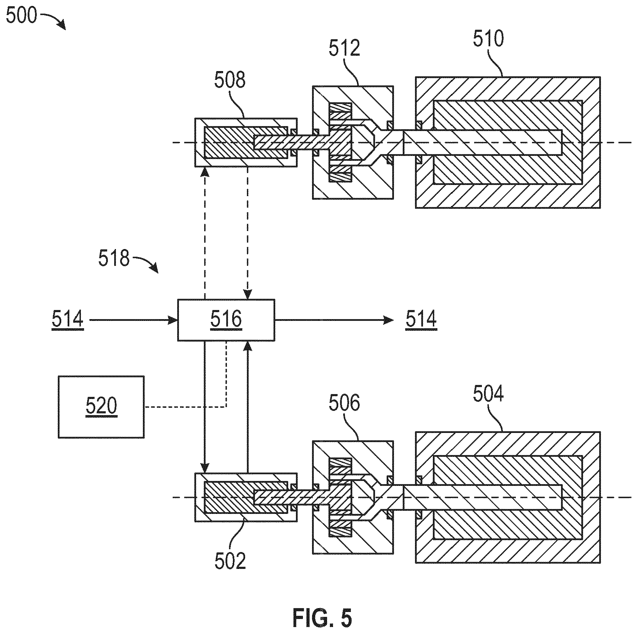

Turning now to FIG. 5, a schematic diagram of a turbo generator system 500 in accordance with an embodiment of the present invention is shown. The turbo generator system 500 includes a first turbo expander 502 operably connected to a first load source 504 by a first gear box 506, arranged and operable similar to that described with respect to FIG. 4. In this embodiment, the turbo generator system 500 also includes a second turbo expander 508 operably coupled to a second load source 510 by a second gear box 512. The second turbo expander 508, second load source 510, and second gear box 512 may also be arranged and operable similar to that described with respect to FIG. 4. In this configuration, each of the first turbo expander 502 and the second turbo expander 508 are operably connected along a fluid line 514 which can supply hydrogen to one or both of the first and second turbo expanders 502, 508 by means of a valve assembly 516 arranged along the fluid line 514. As such, the hydrogen can be selectively supplied to one or both of the turbo expanders 502, 508. As used herein, the term "load source" refers to a component that can convert rotational energy from a turbo expander into work onboard an aircraft. The load source include, without limitation, generators, pumps, actuators, or the like, as will be appreciated by those of skill in the art.

In one non-limiting example, and as illustrated, the first turbo expander 502 may be always supplied with hydrogen from the valve assembly 516 (illustrated by solid lines). That is, the valve assembly 516 may be open to the first turbo expander 502 at all times and thus the fuel will always flow into and through the first turbo expander 502. As such, the first load source 504 may be operated to generate power at all times of operation. The second turbo expander 508 may be selectively operated by actuation of the valve assembly 516 which can direct all or a portion of the flow from the fluid line 514 (illustrated as dashed lines). For example, in some configurations, the second turbo expander 508 and the second load source 510 may be provided as a redundant or backup system in the event of a failure of the first turbo expander 502, the first load source 504, the first gear box 506, or components thereof. In other embodiments, the second turbo expander 508 and the second load source 510 may be used simultaneously with operation of the first turbo expander 502 and the first load source 504. In such embodiments, the secondary operation may be configured to generate additional power if required by systems of the aircraft, for example. In some configurations, the two load sources 504, 510, when configured as generators, may be typically operated at a power generation level that is less than a maximum generation level in order to minimize wear on the components of the turbo generator system 500. However, each of the turbo expanders 502, 508 and the load sources 504, 510 (e.g., generators) may be sized and configured to generate power at sufficient levels to compensate in the event that the other set of components has a failure or otherwise does not or cannot generate power. In some embodiments, such as in a redundancy configuration, each of the load source generators 504, 510 may be configured to generate at least 300 kW (e.g., 300 kW, 500 kW, 750 kW, 1 MW, etc.) of electrical power. In other embodiments, the combined output of the two load source generators 504, 510 may be at least 300 kW (e.g., 300 kW, 500 kW, 750 kW, 1 MW, etc.) of electrical power.

In the embodiment of FIG. 5, the valve assembly 516 is part of a selective coupler 518 that includes a controller 520. The controller 520 may be configured to selectively control operation of the valve assembly 516 to control where the working fluid is directed (e.g., to the first turbo expander 502 and/or to the second turbo expander 508). As noted above, in some embodiments, the first turbo expander 502 may be continuously supplied with hydrogen to drive operation of the first load source 504. However, in other embodiments, the valve assembly 516 may be controlled to selectively direct hydrogen (or other working fluid) to only the first turbo expander 502, only the second turbo expander 508, to both of the turbo expanders 502, 508, or neither of the turbo expanders 502, 508. The controller 520 may be a dedicated or discrete electronic controller or the like or may be integrated into other electronic systems of an aircraft. The operation of the selected coupler 518 may be configured to extract and generate work from hydrogen or other fuel onboard an aircraft. It will be appreciated that, in some configurations, the fuel may pass along the fluid line 514 and bypass the turbo expanders 502, 508, if necessary.

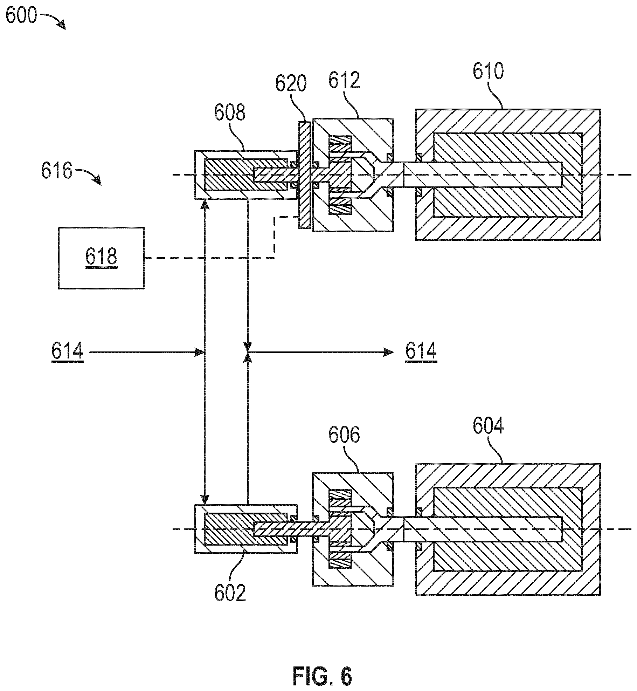

Turning now to FIG. 6, a schematic diagram of a turbo generator system 600 in accordance with an embodiment of the present disclosure is shown. The turbo generator system 600 includes a first turbo expander 602 operably connected to a first load source 604 by a first gear box 606, arranged and operable similar to that described above. In this embodiment, the turbo generator system 600 also includes a second turbo expander 608 operably coupled to a second load source 610 by a second gear box 612. The second turbo expander 608, second load source 610, and second gear box 612 may also be arranged and operable similar to that described above. In this configuration, each of the first turbo expander 602 and the second turbo expander 608 are operably connected along a fluid line 614 which can supply hydrogen to one or both of the first and second turbo expanders 602, 608 by means of a selective coupler 616. The selective coupler 616, in this embodiment, is operably connected between the second turbo expander 608 and the second gear box 612. In contrast to the embodiment of FIG. 5, the hydrogen, fuel, or working fluid is supplied to both of the turbo expanders 602, 608 at all times (i.e., no valving). In this particular illustrative configuration, the selective coupler 616 includes a controller 618 and a clutch 620.

In one non-limiting example, and as illustrated, both the first turbo expander 602 and the second turbo expander 608 may be always supplied with hydrogen from the fluid line 614 (illustrated by solid lines). That is, the fluid line 614 may be open to both the first turbo expander 602 and the second turbo expander 608 at all times and thus the fuel will always flow into and through the turbo expanders 602, 608. When the selective coupler 616 has the second turbo expander 608 disengaged by the clutch 620, the second turbo expander 608 may freewheel.

In this illustrative configuration, the first load source 604 may be operated to generate power at all times of operation because the first turbo expander 602. The second turbo expander 608 may be selectively operated by actuation of the clutch 620 of the selective coupler 616. For example, in some configurations, the second turbo expander 608 and the second load source 610 may be provided as a redundant or backup system in the event of a failure of the first turbo expander 602, the first load source 604, the first gear box 606, or components thereof. In other embodiments, the second turbo expander 608 and the second load source 610 may be used simultaneously with operation of the first turbo expander 602 and the first load source 604. In such embodiments, the secondary operation may be configured to generate additional power if required by systems of the aircraft, for example. In some configurations, the two load sources 604, 610, when configured as generators, may be typically operated at a power generation level that is less than a maximum generation level in order to minimize wear on the components of the turbo generator system 600. However, each of the turbo expanders 602, 608 and the load sources 604, 610 (e.g., generators) may be sized and configured to generate power at sufficient levels to compensate in the event that the other set of components has a failure or otherwise does not or cannot generate power. In some embodiments, such as in a redundancy configuration, each of the load source generators 604, 610 may be configured to generate at least 300 kW of electrical power. In other embodiments, the combined output of the two load source generators 604, 610 may be at least 300 kW of electrical power.

In the embodiment of FIG. 6, the selective coupler 616 includes the controller 618 and the clutch 620. The controller 618 may be configured to selectively control operation of the clutch 620 to control when the second turbo expander 608 is engaged to drive the second load source 610. As noted above, in some embodiments, the first turbo expander 602 may be continuously connected to drive operation of the first load source 604. When the clutch 620 is engaged, both turbo generators 602, 608 may be operated to generate work at the respective load sources 604, 610. The controller 618 may be a dedicated or discrete electronic controller or the like or may be integrated into other electronic systems of an aircraft. The operation of the selected coupler 616 may be configured to extract and generate work from hydrogen or other fuel onboard an aircraft.

In the embodiments of FIGS. 5-6, the systems include two turbo expanders each, with one that is always connected and one that is selectively connectable. However, such systems are not intended to be limiting. For example, in some embodiments, both turbo expanders may be selectively coupled through a selective coupler. That is, in some embodiments, the first turbo expander 502 may be connected/disconnected through the valve assembly 516. Similarly, in the embodiment of FIG. 6, the first turbo expander 602 may be selectively couplable/decouplable from the first load source 604 by a respective clutch. Further, although shown with two turbo expanders in the turbo generator systems 500, 600, such number is not to be limiting. For example, in some embodiments, one or more turbo expanders may be selectively coupled to multiple different load sources.

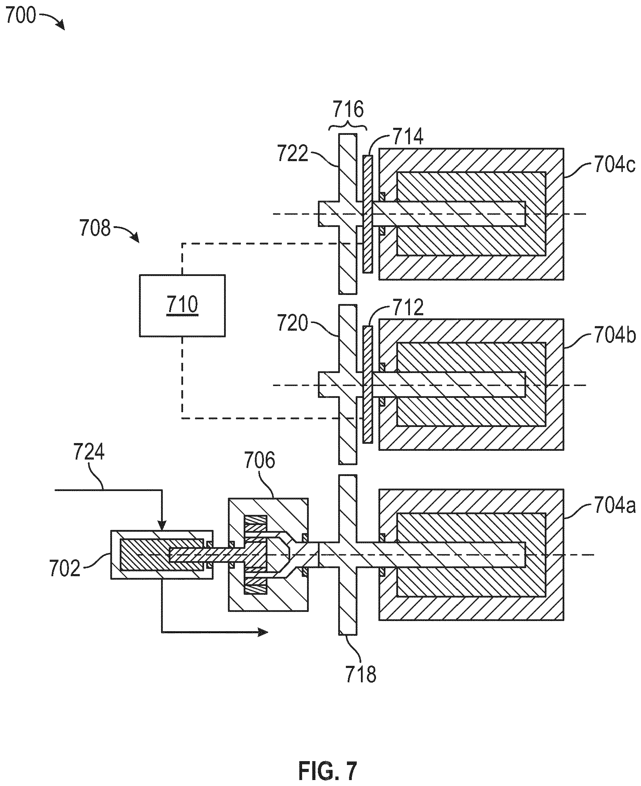

Turning now to FIG. 7, a schematic diagram of a turbo generator system 700 in accordance with an embodiment of the present disclosure is shown. The turbo generator system 700 includes a turbo expander 702 operably connected to multiple load sources 704a-c (representative of any number of load sources) by a gear box 706, arranged and operable similar to that described above. In this embodiment, the turbo expander 702 is configured to operationally drive one or more of the load sources 704a-c through a selective coupler 708 includes a controller 710 and multiple clutches 712, 714. Operably coupled between the gear box 706 and the load sources 704a-c is a geared assembly 716 formed of a first gear 718, a second gear 720, and a third gear 722.

In basic operation, a fuel may flow along a fluid line 724 and into the turbo expander 702. The fuel will drive rotation of the turbo expander 702 which will output rotational energy that can be converted into work by the load sources 704a-c. The controller 710 may be configured to selectively engage or disengage one or more of the clutches 712, 714 to generate work by second and third load sources 704b, 704c. When the clutches 712, 714 are disengaged, only the first load source 704a is operated and the second and third gears 720, 722 may freewheel. However, as fluid flow through the turbo expander 702 increases, the first load source 704a may not consume all of the rotational energy, and thus downstream load sources 704b-c may be selectively operated to take advantage of any excess energy generated at the turbo expander 702.

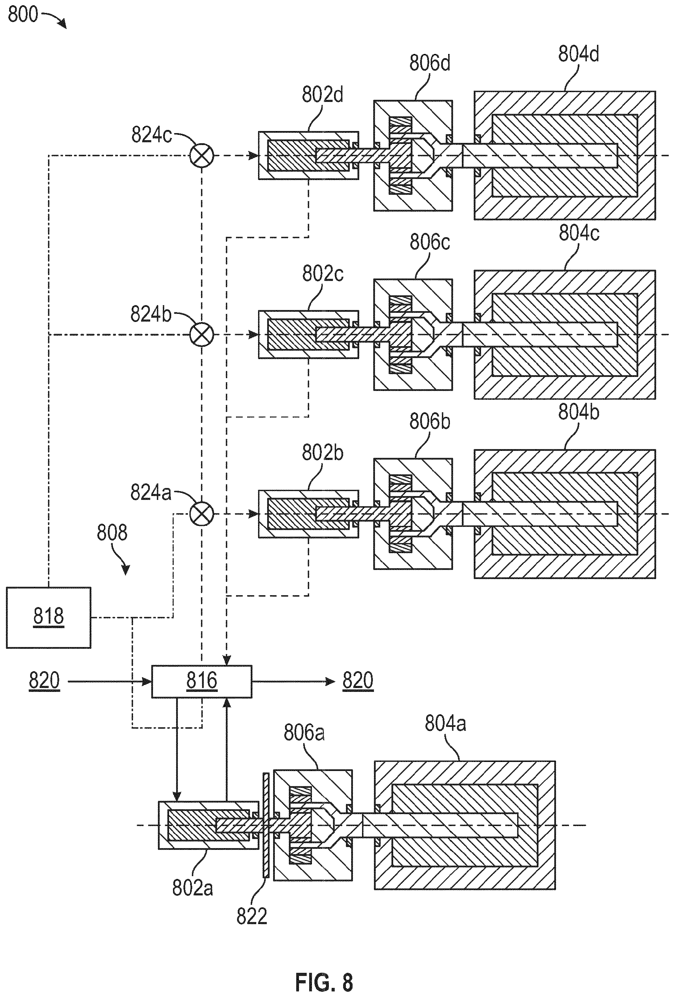

Turning now to FIG. 8, a multi-load source, valve-type turbo generator system 800 in accordance with an embodiment of the present disclosure is shown. The turbo generator system 800, in this embodiment, includes a plurality of turbo expanders 802a-d. In this configuration, each turbo expander 802a-d is operably connected to a respective load source 804a-d, with a respective gear box 806a-d connected therebetween. This configuration is similar to that shown and described with respect to FIG. 5, but rather than only two turbo expanders and associated components, the present embodiment illustrates that multiple can be assembled in a turbo generator system in accordance with embodiments of the present disclosure.

In the embodiment of FIG. 8, a selective coupler 808 is provided having a valve assembly 816 that is operably connected to a controller 818. The valve assembly 816 is, at least partially, disposed along a fluid line 820, similar to that described above. The controller 818 may be configured to selectively control operation of the valve assembly 816 to control where the working fluid is directed. The valve assembly 816 is arranged to selectively direct fluid from the fluid line 820 to one or more of the turbo generators 802a-d. In some embodiments, similar to that described above, a first turbo expander 802a may be in an always connected state and thus the first load source 804a may always be operated to generate work/power/etc. It will be appreciated that in some embodiments, and as shown, a clutch 822 may be incorporated to the valved system for selective disengagement between the first turbo generator 802a and the first load source 804a, and in such instances, the first turbo generator 802a may freewheel.

If the fuel flow is at sufficient level, generation of additional work may be achieved and the valve assembly 816 may be controlled to open and direct fluid toward the downstream turbo generators 802b-d. Such direction may be incremental, such that only a second turbo generator 802b is supplied with fluid and operated to drive the second load source 804b. If the flow rates are high enough, a first downstream valve 824a may be opened to allow a portion of the fluid to pass down to the third turbo generator 802c and thus the third load source 804c may be operated. Such further expansion of the system may be achieved by opening more downstream valves 824b-c. As such, the amount of work or power extracted from the flow of fuel may be maximized.

In an alternative configuration, each of the turbo expanders 802a-d and/or load sources 804a-d may be rated at different levels, and the valve system 816, 824a-c, may be controlled for selective operation of one or more of the turbo generators 802a-d. In such configurations, the first turbo generator 802a may not be continuously operated, but may be selectively operated as done with the other turbo generators 802b-c. For example, in one non-limiting example, each of the load sources 804a-c may be an electrical power generator that is configured to generate a different amount of peak power. Based on the flow passing through the valve assembly 816, the controller 818 may be configured to open one or more valves 824b-c (and/or direct flow to the first turbo generator 802a in this illustrative configuration).

It will be appreciated that various components and elements of the above described embodiments may be combined in configurations that are not illustratively shown but captured by the present disclosure. For example, a plurality of turbo expanders may be configured with both valving and clutches for selective operation thereof. Further, in some embodiments, a single turbo generator may be coupled to multiple different load sources by clutches or the like.

In the above described embodiments, a turbo expander assembly is provided to selectively engage or disengage from one or more load sources. In some embodiments the turbo expander assembly may be formed of a single turbo expander that is selectively coupled to two or more load sources (e.g., FIG. 7). In other embodiments, the turbo expander assembly may be formed of multiple turbo expanders that are each coupled to a respective load source (e.g., FIGS. 5, 6, 8). In these configurations, the selective decoupler is configured for selective operation of the load sources, whether by valve(s) and/or clutch(es).

In accordance with embodiments of the present disclosure, multiple expanders may be provided within systems disclosed herein to retain high efficiency and an acceptable range(s) of mechanical power (e.g., speed and load) throughout a wide range of fuel flow rates. For example, such flow rates may vary by a factor of ten or greater between idle and full power operations. In view of this, the controllers (e.g., controllers 520, 618, 710, 818) may be configured in operable communication with one or more flow sensors or operably connected or in communication with other control systems, for example. Such controllers may be configured to respond to engine thrust command(s) and/or fuel flow rates as a way to determine how many expanders and/or load source to be engaged during a particular operational envelop. As such, the controller may be configured to control flow diversions and/or operation of one or more turbo expanders and/or load sources, based on external factors, such as associated with flight control operations.

In one non-limiting example of operation of a controller, turbo expander assembly, and connected load sources onboard an aircraft, the controller may be configured to operate or direct flow to a lowest (fewest) number of turbo expanders (or load sources) at ground and decent idle conditions and a maximum number at takeoff and climb conditions. Cruise flow conditions are in between, and thus more than the lowest number and less than the maximum number may be employed or operated at cruise. In some aircraft configurations and flight conditions, cruise is at about 30% of the flow at takeoff and idle is about 5-10% of takeoff flow. As such, in a configuration with two turbo expanders (and/or two load sources), the controller may be configured to ensure operation of both devices at takeoff and climb and one at cruise and idle. However, by having more than two turbo expanders (and/or load sources) in a system, the number of currently operating turbo expanders (and/or load sources) may be adjusted by the controller based on actual flow ratios through the one or more turbo expanders.

Further, in embodiments with multiple turbo expanders and/or multiple connected load sources, the controller(s) may be configured to detect failures or issues associated with one or more of the operably connected turbo expanders/load sources. For example, in a case of a failed turbo expander, a controller may be configured to detect such failure by detecting a shaft RPM of a turbo expander that is operating at a range outside of expected or predetermined range(s). A failed turbo expander may also be detected through a controller function/operation by detecting a low or non-existent power output from a load source that is operably connected to a given turbo expander. In such instances, a valve or clutch associated with the turbo expander may be actuated or operated to disconnect the individual turbo expander. The controller, in such situations, may also accommodate the loss of generator power from that turbo expander by raising the load on other turbo expander.

Given the redundancy and potential need to ensure specific power generation and/or work output from associated load sources, each of the load sources and/or turbo expanders may be configured and designed to accommodate such a failure scenario. For example, as discussed above, during normal operation, one or more of the turbo expanders and/or load sources may be configured to operate at less than maximum capacity, and thus there is space to increase capacity of one or more turbo expanders and/or load sources to maintain the required power and/or work generation through such systems.

The controllers of systems of the present disclosure and associated with turbo expander assemblies with operably connected load sources, may be configured as independent electronic and/or electrical devices, or may be software or hardware incorporated into already existing control devices and systems that exist, for example, onboard an aircraft. The controllers may be operably coupled to thrust command software and/or hardware in order to respond to thrust commands. The controllers may be in electrical and/or mechanical connection and/or communication with various types of sensors, including, without limitation, flow sensors (e.g., to detect throughflow of fuel through a turbo expander assembly), pressure sensors, temperature sensors, back pressure sensors, contact sensors (e.g., to detect contact in clutch-type configurations), and the like, as will be appreciated by those of skill in the art.

In some configurations, the controller may determine which and/or how many turbo expanders receive fuel throughflow and/or are operably connected to respective load sources based on throughflow and rotational energy of the turbo expanders. In some configurations, alternatively or in combination with turbo expander selective coupling, the controllers may be configured to determine which and/or how many load sources are operably connected and driven by one or more turbo expanders of the turbo expander assemblies. Further, the controllers may be configured to detect failure of turbo expanders and/or load sources based on rotational speeds, power output, current draws, sensor-based detection of failure, or the like. Upon detection of such failure, the controller can control the selective coupler to accommodate such failures. It will be appreciated that a failure may not be the only condition requiring such selective coupling. For example, if extra power is required from an operation, the controller may be configured to engage and/or selectively couple one or more additional load sources and/or associated turbo generators to generate such excess power.

Advantageously, embodiments of the present disclosure are directed to improved turbine engine systems that employ non-hydrocarbon fuels at cryogenic temperatures. In accordance with some embodiments, the systems described herein provide for a hydrogen-burning turbine engine that may include one or more load sources that are driven using one or more turbo expanders that are arranged along a fuel flow path from a cryogenic fuel source to a burner or other consumption device (e.g., fuel cell). The turbo expanders may be configured as multi-stage, multi-portion expanders that extract work from the fuel or working fluid, while reducing the pressure and temperature of the working fluid. In accordance with embodiments of the present disclosure, the multiple load sources may be used to generate work, generate power (e.g., electric generator), perform actuation or operation (e.g., actuation/valves/pumps), or the like. By including multiple load sources that can be selectively coupled to the driving mechanism (e.g., one or more turbo expanders), an aircraft system is provided that can leverage energy from a cryogenic source in a stepped manner such that optimal or desired work extraction can be achieved. Further, through selective decoupling, when flow rates drop, one or more turbo expanders can be decoupled or transitioned to freewheel. Accordingly, a controlled load source operation may be achieved without negatively impacting the fuel systems of the aircraft.

Accordingly, the present invention is not to be seen as limited by the foregoing description but is only limited by the scope of the appended claims.

## Claims

1. An aircraft propulsion system (300), comprising:
an aircraft system (304) comprising at least one fuel tank (332) and an aircraft-system heat exchanger (358); and
an engine system (302) comprising at least a main engine core, a high pressure pump (316), a fuel-air heat exchanger (324), and a turbo expander assembly ( 500; 600; 700; 800), wherein the main engine core comprises a compressor section (24), a combustor section (26) having a burner (310), and a turbine section (28), wherein fuel is supplied from the at least one fuel tank (332) through a fuel flow path (344), passing through the aircraft-system heat exchanger (358), the high pressure pump (316), and the fuel-air heat exchanger (324), prior to being injected into the burner (310) for combustion,
**characterised in that**:
said fuel supplied from the at least one fuel tank (332) through the fuel flow path (344) passes selectively through the turbo expander assembly prior to being injected into the burner (310) for combustion; and
the turbo expander assembly (500 ... 800) is operably coupled to at least two load sources (504, 510; 604, 610; 704; 804) through a selective coupler (518; 616; 708; 808) and configured to selectively drive operation of at least one of the at least two load sources (504 ... 804).

2. The aircraft propulsion system (300) of claim 1, wherein the turbo expander assembly (700) consists of a single turbo expander (702) operably coupled to the at least two load sources (704), and the selective coupler (708) comprises a clutch assembly (708) configured to selectively connect the turbo expander to a first load source (704a) and a second load source (704b) of the at least two load sources (704).

3. The aircraft propulsion system (300) of claim 2, wherein the first load source (704a) is continuously driven by the turbo expander (702) and the second load source (704b) is decouplable from the turbo expander (702) by a clutch (712).

4. The aircraft propulsion system (300) of claim 1, wherein the turbo expander assembly (500) comprises a first turbo expander (502) operably coupled to a first load source (504), and a second turbo expander (508) operably coupled to a second load source (510).

5. The aircraft propulsion system (300) of claim 4, wherein:
the first load source (504) and the second load source (510) are electric generators having a combined power output of at least 300 kW of power; or
each of the first load source (504) and the second load source (510) are electric generators each configured to generate at least 300 kW of power.

6. The aircraft propulsion system (300) of claim 4 or 5, further comprising a valve assembly (516) arranged upstream of each of the first turbo expander (502) and the second turbo expander (508), wherein the valve assembly (516) is configured to selectively direct fuel to each of the first turbo expander (502) and the second turbo expander (508).

7. The aircraft propulsion system (300) of claim 4 or 5, further comprising a valve assembly (516) arranged upstream of each of the first turbo expander (502) and the second turbo expander (508), wherein the valve assembly (516) is configured to always supply fuel to the first turbo expander (502) and to selectively direct fuel to the second turbo expander (508).

8. The aircraft propulsion system (300) of any of claims 4 to 7, further comprising a first gearbox (506) arranged between the first turbo expander (502) and the first load source (504) and a second gearbox (512) arranged between the second turbo expander (508) and the second load source (510).

9. The aircraft propulsion system (300) of claim 1, wherein the turbo expander assembly (800) comprises a plurality of turbo expanders (802), the at least two load sources comprises a number of load sources (804) equal to the number of turbo expanders (802), and each turbo expander (802) is selectively coupled to a respective load source (804).

10. The aircraft propulsion system (300) of claim 1, wherein:
the turbo expander assembly (600) comprises a first turbo expander (602) operably coupled to a first load source (604) through a first gearbox (606) and a second turbo expander (608) operably coupled to a second load source (610) through a second gearbox (612); and
the selective coupler (616) comprises a clutch (620) arranged between the second turbo expander (608) and the second load source (610), the aircraft propulsion system (300) optionally further comprising
a third turbo expander (608) operably coupled to a third load source (610) through a third gear box (612) and the selective coupler (616) comprises a second clutch (620) arranged between the third turbo expander (608) and the third gear box (612).

11. The aircraft propulsion system (300) of claim 1,
wherein a first turbo expander (802a) of the turbo expander assembly (800) is selectively coupled to a first load source (804a) by a clutch (822) of the selective coupler (808); and
wherein a second turbo expander (802b) of the turbo expander assembly (800) is selectively coupled to a source of fuel through a valve assembly (816) of the selective coupler (808).

12. The aircraft propulsion system (300) of any preceding claim, wherein a first load source (504; 604; 704a; 804a) of the at least two load sources (504, 510; 604, 610; 704; 804) is an electric generator configured to generate a first power output and a second load source (510; 610; 704b; 804b) of the at least two load sources (504, 510; 604, 610; 704; 804) is an electric generator configured to generate a second power output that is different from the first power output.

13. The aircraft propulsion system (300) of any preceding claim, wherein the selective coupler (518; 616; 708; 808) is a valve assembly (516; 816) and/or a clutch assembly (616; 708).

14. The aircraft propulsion system (300) of any preceding claim, wherein the fuel is hydrogen.

15. A method of operating an aircraft propulsion system (300), the method comprising:
coupling a turbo expander assembly ( 500; 600; 700; 800) to at least two load sources (504, 510; 604, 610; 704; 804) through a selective coupler (518; 616; 708; 808);
supplying, from at least one fuel tank (332), fuel through a fuel flow path (344) comprising passing the fuel through an aircraft-system heat exchanger (358), a high pressure pump (316), a fuel-air heat exchanger (324), and selectively through the turbo expander assembly (500 ... 800) comprising at least one turbo expander ( 502, 508; 602, 608; 702; 802), prior to injecting the fuel into a burner (310) for combustion thereof, wherein the at least one turbo expander (502 ... 802) is rotationally driven by the fuel passing therethrough; and
detecting a throughflow of fuel through the turbo expander assembly; and controlling operation of the selective coupler (518 ... 808) to drive operation of the at least one turbo expander (502 ... 802) and/or selectively control operation of one or more of the operably connected load sources (504 ... 804) based on the detected throughflow.

## Patentansprüche

1. Luftfahrzeugantriebssystem (300), umfassend:
ein Luftfahrzeugsystem (304), das mindestens einen Brennstofftank (332) und einen Luftfahrzeugsystem-Wärmetauscher (358) umfasst; und
ein Triebwerkssystem (302), das mindestens einen Haupttriebwerkskern, eine Hochdruckpumpe (316), einen Brennstoff-Luft-Wärmetauscher (324) und eine Turboexpanderbaugruppe (500; 600; 700; 800) umfasst, wobei der Haupttriebwerkskern einen Verdichterabschnitt (24), einen Brennkammerabschnitt (26) mit einem Brenner (310) und einen Turbinenabschnitt (28) umfasst, wobei Brennstoff von dem mindestens einen Brennstofftank (332) durch einen Brennstoffströmungsweg (344) zugeführt wird, wobei er den Luftfahrzeugsystem-Wärmetauscher (358), die Hochdruckpumpe (316) und den Brennstoff-Luft-Wärmetauscher (324) durchläuft, bevor er zur Verbrennung in den Brenner (310) eingespritzt wird,
**dadurch gekennzeichnet, dass**:
der von dem mindestens einen Brennstofftank (332) durch den Brennstoffströmungsweg (344) zugeführte Brennstoff selektiv die Turboexpanderbaugruppe durchläuft, bevor er zur Verbrennung in den Brenner (310) eingespritzt wird; und
die Turboexpanderbaugruppe (500 ... 800) über einen selektiven Koppler (518; 616; 708; 808) an mindestens zwei Lastquellen (504, 510; 604, 610; 704; 804) wirkgekoppelt und dazu konfiguriert ist, den Betrieb mindestens einer der mindestens zwei Lastquellen (504 ... 804) selektiv anzusteuern.

2. Luftfahrzeugantriebssystem (300) nach Anspruch 1, wobei die Turboexpanderbaugruppe (700) aus einem einzelnen Turboexpander (702) besteht, der an die mindestens zwei Lastquellen (704) wirkgekoppelt ist, und der selektive Koppler (708) eine Kupplungsbaugruppe (708) umfasst, die dazu konfiguriert ist, den Turboexpander selektiv mit einer ersten Lastquelle (704a) und einer zweiten Lastquelle (704b) der mindestens zwei Lastquellen (704) zu verbinden.

3. Luftfahrzeugantriebssystem (300) nach Anspruch 2, wobei die erste Lastquelle (704a) durch den Turboexpander (702) kontinuierlich angetrieben wird und die zweite Lastquelle (704b) durch eine Kupplung (712) von dem Turboexpander (702) abkoppelbar ist.

4. Luftfahrzeugantriebssystem (300) nach Anspruch 1, wobei die Turboexpanderbaugruppe (500) einen ersten Turboexpander (502), der an eine erste Lastquelle (504) wirkgekoppelt ist, und einen zweiten Turboexpander (508), der an eine zweite Lastquelle (510) wirkgekoppelt ist, umfasst.

5. Luftfahrzeugantriebssystem (300) nach Anspruch 4, wobei:
die erste Lastquelle (504) und die zweite Lastquelle (510) elektrische Generatoren mit einer kombinierten Ausgangsleistung von mindestens 300 kW Leistung sind; oder
jede von der ersten Lastquelle (504) und der zweiten Lastquelle (510) ein elektrischer Generator ist, der jeweils dazu konfiguriert ist, mindestens 300 kW Leistung zu erzeugen.

6. Luftfahrzeugantriebssystem (300) nach Anspruch 4 oder 5, ferner umfassend eine Ventilbaugruppe (516), die stromaufwärts von jedem von dem ersten Turboexpander (502) und dem zweiten Turboexpander (508) angeordnet ist, wobei die Ventilbaugruppe (516) dazu konfiguriert ist, selektiv Brennstoff zu jeden von dem ersten Turboexpander (502) und dem zweiten Turboexpander (508) zu leiten.

7. Luftfahrzeugantriebssystem (300) nach Anspruch 4 oder 5, ferner umfassend eine Ventilbaugruppe (516), die stromaufwärts von jedem von dem ersten Turboexpander (502) und dem zweiten Turboexpander (508) angeordnet ist, wobei die Ventilbaugruppe (516) dazu konfiguriert ist, dem ersten Turboexpander (502) ständig Brennstoff zuzuführen und selektiv Brennstoff zu dem zweiten Turboexpander (508) zu leiten.

8. Luftfahrzeugantriebssystem (300) nach einem der Ansprüche 4 bis 7, ferner umfassend ein erstes Getriebe (506), das zwischen dem ersten Turboexpander (502) und der ersten Lastquelle (504) angeordnet ist, und ein zweites Getriebe (512), das zwischen dem zweiten Turboexpander (508) und der zweiten Lastquelle (510) angeordnet ist.

9. Luftfahrzeugantriebssystem (300) nach Anspruch 1, wobei die Turboexpanderbaugruppe (800) eine Vielzahl von Turboexpandern (802) umfasst, die mindestens zwei Lastquellen eine Anzahl von Lastquellen (804) umfassen, die der Anzahl von Turboexpandern (802) entspricht, und jeder Turboexpander (802) selektiv an eine jeweilige Lastquelle (804) gekoppelt ist.

10. Luftfahrzeugantriebssystem (300) nach Anspruch 1, wobei:
die Turboexpanderbaugruppe (600) einen ersten Turboexpander (602), der über ein erstes Getriebe (606) an eine erste Lastquelle (604) wirkgekoppelt ist, und einen zweiten Turboexpander (608), der über ein zweites Getriebe (612) an eine zweite Lastquelle (610) wirkgekoppelt ist, umfasst; und
der selektive Koppler (616) eine Kupplung (620) umfasst, die zwischen dem zweiten Turboexpander (608) und der zweiten Lastquelle (610) angeordnet ist, wobei das Luftfahrzeugantriebssystem (300) optional ferner einen dritten Turboexpander (608) umfasst, der über ein drittes Getriebe (612) an eine dritte Lastquelle (610) wirkgekoppelt ist, und der selektive Koppler (616) eine zweite Kupplung (620) umfasst, die zwischen dem dritten Turboexpander (608) und dem dritten Getriebe (612) angeordnet ist.

11. Luftfahrzeugantriebssystem (300) nach Anspruch 1,
wobei ein erster Turboexpander (802a) der Turboexpanderbaugruppe (800) durch eine Kupplung (822) des selektiven Kopplers (808) selektiv an eine erste Lastquelle (804a) gekoppelt ist; und wobei ein zweiter Turboexpander (802b) der Turboexpanderbaugruppe (800) über eine Ventilbaugruppe (816) des selektiven Kopplers (808) selektiv an eine Brennstoffquelle gekoppelt ist.

12. Luftfahrzeugantriebssystem (300) nach einem der vorhergehenden Ansprüche, wobei eine erste Lastquelle (504; 604; 704a; 804a) der mindestens zwei Lastquellen (504, 510; 604, 610; 704; 804) ein elektrischer Generator ist, der dazu konfiguriert ist, eine erste Ausgangsleistung zu erzeugen, und eine zweite Lastquelle (510; 610; 704b; 804b) der mindestens zwei Lastquellen (504, 510; 604, 610; 704; 804) ein elektrischer Generator ist, der dazu konfiguriert ist, eine zweite Ausgangsleitung zu erzeugen, die sich von der ersten Ausgangsleistung unterscheidet.

13. Luftfahrzeugantriebssystem (300) nach einem der vorhergehenden Ansprüche, wobei der selektive Koppler (518; 616; 708; 808) eine Ventilbaugruppe (516; 816) und/oder eine Kupplungsbaugruppe (616; 708) ist.

14. Luftfahrzeugantriebssystem (300) nach einem der vorhergehenden Ansprüche, wobei der Brennstoff Wasserstoff ist.

15. Verfahren zum Betreiben eines Luftfahrzeugantriebssystems (300), wobei das Verfahren Folgendes umfasst:
Koppeln einer Turboexpanderbaugruppe (500; 600; 700; 800) an mindestens zwei Lastquellen (504, 510; 604, 610; 704; 804) über einen selektiven Koppler (518; 616; 708; 808);
Zuführen von Brennstoff aus mindestens einem Brennstofftank (332) durch einen Brennstoffströmungsweg (344), umfassend, dass der Brennstoff einen Luftfahrzeugsystem-Wärmetauscher (358), eine Hochdruckpumpe (316), einen Brennstoff-Luft-Wärmetauscher (324) und selektiv die Turboexpanderbaugruppe (500 ... 800) durchläuft, die mindestens einen Turboexpander (502, 508; 602, 608; 702; 802) umfasst, bevor der Brennstoff zu seiner Verbrennung in einen Brenner (310) eingespritzt wird, wobei der mindestens eine Turboexpander (502 ... 802) durch den durchlaufenden Brennstoff drehend angetrieben wird; und Erfassen eines Brennstoffdurchflusses durch die Turboexpanderbaugruppe; und
Steuern des Betriebs des selektiven Kopplers (518 ... 808), um den Betrieb des mindestens einen Turboexpanders (502 ... 802) anzusteuern und/oder den Betrieb einer oder mehrerer der wirkverbundenen Lastquellen (504 ... 804) auf Grundlage des erfassten Durchflusses selektiv zu steuern.

## Revendications

1. Système de propulsion d'aéronef (300), comprenant :
un système d'aéronef (304) comprenant au moins un réservoir carburant (332) et un échangeur de chaleur de système d'aéronef (358) ; et
un système de moteur (302) comprenant au moins un noyau central principal, une pompe haute pression (316), un échangeur de chaleur carburant-air (324), et un ensemble turbodétendeur (500 ; 600 ; 700 ; 800), dans lequel le noyau central principal comprenant une section de compresseur (24), une section de chambre de combustion (26) présentant un brûleur (310), et une section de turbine (28), dans lequel du carburant est fourni à partir de l'au moins un réservoir carburant (332) à travers un trajet d'écoulement de carburant (344), passant à travers l'échangeur de chaleur de système d'aéronef (358), la pompe haute pression (316) et l'échangeur de chaleur carburant-air (324), avant d'être injecté dans le brûleur (310) pour la combustion,
**caractérisé en ce que** :
ledit carburant fourni à partir de l'au moins un réservoir carburant (332) à travers le trajet d'écoulement de carburant (344) passe sélectivement à travers l'ensemble turbodétendeur avant d'être injecté dans le brûleur (310) pour la combustion ; et
l'ensemble turbodétendeur (500 ... 800) est couplé de manière opérationnelle à au moins deux sources de charge (504, 510 ; 604, 610 ; 704 ; 804) à travers un coupleur sélectif (518 ; 616 ; 708 ; 808) et configuré pour entraîner sélectivement le fonctionnement d'au moins l'une des au moins deux sources de charge (504 804).

2. Système de propulsion d'aéronef (300) selon la revendication 1, dans lequel l'ensemble turbodétendeur (700) se compose d'un seul turbodétendeur (702) couplé de manière opérationnelle aux au moins deux sources de charge (704), et le coupleur sélectif (708) comprend un ensemble embrayage (708) configuré pour connecter sélectivement le turbodétendeur à une première source de charge (704a) et à une deuxième source de charge (704b) des au moins deux sources de charge (704).

3. Système de propulsion d'aéronef (300) selon la revendication 2, dans lequel la première source de charge (704a) est entraînée en continu par le turbodétendeur (702) et la deuxième source de charge (704b) peut être découplée du turbodétendeur (702) par un embrayage (712).

4. Système de propulsion d'aéronef (300) selon la revendication 1, dans lequel l'ensemble turbodétendeur (500) comprend un premier turbodétendeur (502) couplé de manière opérationnelle à une première source de charge (504), et un deuxième turbodétendeur (508) couplé de manière opérationnelle à une deuxième source de charge (510).

5. Système de propulsion d'aéronef (300) selon la revendication 4, dans lequel :
la première source de charge (504) et la deuxième source de charge (510) sont des générateurs électriques présentant une puissance de sortie combinée d'au moins 300 kW de puissance ; ou
chacune de la première source de charge (504) et de la deuxième source de charge (510) est des générateurs électriques configurés chacun pour produire au moins 300 kW de puissance.

6. Système de propulsion d'aéronef (300) selon la revendication 4 ou 5, comprenant en outre un ensemble vanne (516) disposé en amont de chacun du premier turbodétendeur (502) et du deuxième turbodétendeur (508), dans lequel l'ensemble vanne (516) est configuré pour diriger sélectivement du carburant vers chacun du premier turbodétendeur (502) et du deuxième turbodétendeur (508).

7. Système de propulsion d'aéronef (300) selon la revendication 4 ou 5, comprenant en outre un ensemble vanne (516) disposé en amont de chacun du premier turbodétendeur (502) et du deuxième turbodétendeur (508), dans lequel l'ensemble vanne (516) est configuré pour fournir en permanence du carburant au premier turbodétendeur (502) et pour diriger sélectivement du carburant vers le deuxième turbodétendeur (508).

8. Système de propulsion d'aéronef (300) selon l'une quelconque des revendications 4 à 7, comprenant en outre une première boîte d'engrenages (506) disposée entre le premier turbodétendeur (502) et la première source de charge (504), et une deuxième boîte d'engrenages (512) disposée entre le deuxième turbodétendeur (508) et la deuxième source de charge (510).

9. Système de propulsion d'aéronef (300) selon la revendication 1, dans lequel l'ensemble turbodétendeur (800) comprend une pluralité de turbodétendeurs (802), les au moins deux sources de charge comprennent un nombre de sources de charge (804) égal au nombre de turbodétendeurs (802), et chaque turbodétendeur (802) est couplé sélectivement à une source de charge (804) respective.

10. Système de propulsion d'aéronef (300) selon la revendication 1, dans lequel :
l'ensemble turbodétendeur (600) comprend un premier turbodétendeur (602) couplé de manière opérationnelle à une première source de charge (604) à travers une première boîte d'engrenages (606) et un deuxième turbodétendeur (608) couplé de manière opérationnelle à une deuxième source de charge (610) à travers une deuxième boîte d'engrenages (612) ; et
le coupleur sélectif (616) comprend un embrayage (620) disposé entre le deuxième turbodétendeur (608) et la deuxième source de charge (610), le système de propulsion d'aéronef (300) comprenant optionnellement en outre
un troisième turbodétendeur (608) couplé de manière opérationnelle à une troisième source de charge (610) à travers une troisième boîte d'engrenages (612), et le coupleur sélectif (616) comprend un second embrayage (620) disposé entre le troisième turbodétendeur (608) et la troisième boîte d'engrenages (612).

11. Système de propulsion d'aéronef (300) selon la revendication 1,
dans lequel un premier turbodétendeur (802a) de l'ensemble turbodétendeur (800) est couplé sélectivement à une première source de charge (804a) par un embrayage (822) du coupleur sélectif (808) ; et
dans lequel un deuxième turbodétendeur (802b) de l'ensemble turbodétendeur (800) est couplé sélectivement à une source de carburant à travers un ensemble vanne (816) du coupleur sélectif (808).

12. Système de propulsion d'aéronef (300) selon l'une quelconque revendication précédente, dans lequel une première source de charge (504 ; 604 ; 704a ; 804a) des au moins deux sources de charge (504, 510 ; 604, 610 ; 704 ; 804) est un générateur électrique configuré pour produire une première puissance de sortie et une deuxième source de charge (510 ; 610 ; 704b ; 804b) des au moins deux sources de charge (504, 510 ; 604, 610 ; 704 ; 804) est un générateur électrique configuré pour produire une seconde puissance de sortie qui est différente de la première puissance de sortie.

13. Système de propulsion d'aéronef (300) selon l'une quelconque revendication précédente, dans lequel le coupleur sélectif (518 ; 616 ; 708 ; 808) est un ensemble vanne (516 ; 816) et/ou un ensemble embrayage (616 ; 708).

14. Système de propulsion d'aéronef (300) selon l'une quelconque revendication précédente, dans lequel le carburant est de l'hydrogène.

15. Procédé de fonctionnement d'un système de propulsion d'aéronef (300), le procédé comprenant :
le couplage d'un ensemble turbodétendeur (500 ; 600 ; 700 ; 800) à au moins deux sources de charge (504, 510 ; 604, 610 ; 704 ; 804) à travers un coupleur sélectif (518 ; 616 ; 708 ; 808) ;
la fourniture, à partir d'au moins un réservoir carburant (332), de carburant à travers un trajet d'écoulement de carburant (344) comprenant le passage du carburant à travers un échangeur de chaleur de système d'aéronef (358), une pompe haute pression (316), un échangeur de chaleur carburant-air (324), et sélectivement à travers l'ensemble turbodétendeur (500 ... 800) comprenant au moins un turbodétendeur (502, 508 ; 602, 608 ; 702 ; 802), avant l'injection du carburant dans un brûleur (310) pour la combustion de celui-ci, dans lequel l'au moins un turbodétendeur (502 ... 802) est entraîné en rotation par le carburant passant à travers celui-ci ; et
la détection d'un écoulement de carburant à travers l'ensemble turbodétendeur ; et
le commande du fonctionnement du coupleur sélectif (518 ... 808) pour entraîner le fonctionnement de l'au moins un turbodétendeur (502 ... 802) et/ou la commande sélective du fonctionnement de l'une ou plusieurs des sources de charge (504 ... 804) connectées de manière opérationnelle sur la base de l'écoulement détecté.
